# EUROPEAN PATENT APPLICATION

(11) **EP 1 582 448 A2**
(43) Date of publication of application: **05.10.2005**
(21) Application number: 05007090.3
(22) Date of filing: 31.03.2005
(51) Int. Cl.: B62M 3/00

(54) **Bicycle crank arm**

(30) Priority: 31.03.2004 JP 2004105277
(71) Applicant: SHIMANO INC., Osaka 590-8577 (JP)
(72) Inventor: Iwai, Toru, Kitakatsuragi Nara 639-0202 (JP); Hara, Masaaki, Ikoma Nara 630-0200 (JP); Uchida, Mitsutoshi, Chuo-ku Osaka 541-0041 (JP)
(74) Representative: Grosse, Wolfgang

(57) **Abstract**

A bicycle crank arm 10 is provided that is a light, highly strong, highly rigid and highly designed in a complex shape. The bicycle crank arm 10 has a crank axle mounting end portion 12, a central crank body portion 14 and a pedal mounting end portion 16. The hollow bicycle crank arm 10 is preferably a one-piece, unitary member that is produced by a tube hydroforming method. The hollow bicycle crank arm 10 has a crank axle attachment part 26 located within the crank axle mounting end portion 12 and a pedal spindle attachment part 36 located within the pedal mounting end portion 16. The mounting end portions 12, 16 have a crank axle hole 24 and a pedal spindle hole 34, respectively, with outside diameters that are smaller than the attachment parts 26, 36, respectively.

## Description

### CROSS-REFERENCE TO RELATED APPLICATIONS

This application claims priority to Japanese Patent Application No. 2004-105277. The entire disclosure of Japanese Patent Application No. 2004-105277 is hereby incorporated herein by reference.

### BACKGROUND OF THE INVENTION

### Field of the Invention

The present invention generally relates to a bicycle crank and a method of producing a bicycle crank. More specifically, the present invention relates to a bicycle crank arm produced by hydroforming.

### Background Information

Bicycling is becoming an increasingly more popular form of recreation as well as a means of transportation. Moreover, bicycling has also become a very popular competitive sport. Whether the bicycle is used for recreation, transportation or competition, the current trend is to construct bicycles which are stronger as well as lighter than prior bicycles. In other words, in pursuit of faster running speed, it is desirable to reduce the weight for all kinds of parts of the bicycle.

Accordingly, every part of a bicycle is constantly being redesigned to minimize weight and maximize strength. One part of the bicycle which has been extensively redesigned to be lighter and stronger is the bicycle crank. Among the parts, the bicycle crank is one of the most important parts of a bicycle since it transfers the leg power of a rider to rotational movement. Thus, not only is weight savings important; but also maintaining the rigidity of the bicycle crank is important to efficiently transfer leg power are required.

Each bicycle has a pair of bicycle crank arms which are coupled to the bicycle crank spindle or axle. The crank arms extend outwardly from the crank spindle in opposite directions and have pedals attached to their free ends for supporting the rider's feet. Rotation of the pedals by the rider causes one or more front sprockets to rotate which in turn moves the bicycle chain to rotate one or more rear sprockets, and thus, rotate the rear wheel of the bicycle. In certain crank arm designs, the front sprocket or sprockets are coupled directly to the crank arm by fastening fingers. The fastening fingers are coupled to the hub portion of the crank arm, and extend radially outwardly from the hub portion of the crank arm.

Conventionally, these bicycle crank arms are produced with hollow crank bodies to realize weight saving. These bicycle crank arms are also often produced from forged aluminum alloy to be lightweight. One conventional method of producing a conventional hollow crank body will now be briefly described.

The first step in producing a conventional hollow crank body involves first creating a solid cylindrical member. This solid cylindrical member is often produced by cutting a steel bar. Next, as the second step, a blind bore is formed in a first end of the solid cylindrical member to produce a cup-shaped unprocessed tube with one open end and one closed end. Next, in the third step, the solid cylindrical member is processed to form a crank shaped body by performing multiple forging processes. In this step, the open end of the blind bore is also pressure-bonded by forging to close the end of the crank shaped body.

Next in a fourth step, the crank shaped body is further processed by further forging to form nearly the final crank shape. As a fifth step, the final crank shape is cut by machining to form the final crank product which includes a threaded hole on the pedal end and a spline groove hole on the gear end. Finally, as a sixth step, as needed, the surface of the crank arm is ground and/or polished to become ready for use.

As described above, a conventional production method for crank arms is to make a hollow crank body for weight saving, requires many steps, and they are reflected in the production cost. In addition, since it is created from a steel bar by forging, the thickness of the hollow part is limited to be approximately 4 mm even at the thinnest point. Since all parts of the crank arm are made as thin as possible with this conventional forging technique, additional weight saving is difficult to obtain using this conventional forging technique. Materials are also limited to aluminum alloy because it is needed to form a complex shape by forging a hollow space.

In view of the above, it will be apparent to those skilled in the art from this disclosure that there exists a need for an improved bicycle crank arm, which is light, very strong, highly rigid and designed in a highly complex shape, as well as a production method of producing it easily. This invention addresses this need in the art as well as other needs, which will become apparent to those skilled in the art from this disclosure.

### SUMMARY OF THE INVENTION

One object of the present invention is to provide a bicycle crank which is lightweight, strong and highly rigid.

Another object of the present invention is to provide a bicycle crank which has a highly complex shape that can be easily produced.

Another object of the present invention is to provide a sprocket supporting crank arm which is relatively easy and inexpensive to manufacture.

The foregoing objects can basically be attained by providing a bicycle crank arm formed by tube hydroforming. The bicycle crank arm basically comprises a central crank body portion, crank axle mounting end portion and a pedal mounting end portion. The crank axle mounting end portion is disposed at a first end of the central crank body. The pedal mounting end portion is disposed at a second end of the central crank body. The central crank body portion is formed together with the crank axle mounting end portion and the pedal mounting end portion by tube hydroforming as a hollow one-piece, unitary member with an interior space.

As described above, in the bicycle crank arm of this invention, also for material quality, highly rigid and strong materials can be applied, and by forming together a crank made of tubing material, for which it is easy to select thickness, by being entirely thinned by the hydroforming method, and by keeping open an edge part that does not require strength after being formed by the hydroforming method, or by being covered by a light component such as plastic, weight saving and increase of strength and rigidity can be achieved.

In addition, by providing open end edges, a crank body can be provided as a hollow part with a very advanced design.

Conventional cold forging, as described above, requires many steps to form a complex shape such as a crank arm. However, it is basically possible to form the final crank arm shape by a single step through the hydroforming method, and cost reduction can be achieved. Therefore, by this invention, a bicycle crank which achieves an increase of weight saving, rigidity and strength and improvement of design, can be produced with fewer steps.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle crank set with a hollow bicycle crank arm in accordance with a preferred embodiment of the present invention;
Figure 2 is a perspective view the hollow bicycle crank arm illustrated in Figure 1 that is constructed in accordance with the present invention;
Figure 3 is an exploded perspective view the hollow bicycle crank arm illustrated in Figures 1 and 2 in accordance with the present invention;
Figure 4 is a perspective view of a hollow crank material used as a base tube material to make the hollow bicycle crank arm illustrated in Figures 1-3 in accordance with the present invention;
Figure 5 is a perspective view of an initially deformed tube formed from the hollow crank material illustrated in Figure 4 after the diameter of the base tube material has been changed by swagging or die squeezing;
Figure 6 is a perspective view of a preformed pressed tube formed from the initially deformed tube illustrated in Figure 5 by pressing initially deformed tube into the tube hydroforming mold;
Figure 7 is a perspective view of a crank shaped tube formed from the pressed tube illustrated in Figure 6 after implementing tube hydroforming;
Figure 8 is a perspective view of the crank arm body formed from the crank shaped tube illustrated in Figure 7 by cutting the ends of the crank shaped tube and stamping the crank axle hole and the pedal spindle hole in the crank shaped tube;
Figure 9 is an exploded perspective view of a crank axle attachment part and a pedal spindle attachment part being inserted into the ends of the crank arm body illustrated in Figure 8;
Figure 10 is an exploded perspective view of a pair of end caps being inserted into the ends of the crank arm body illustrated in Figure 9;
Figure 11 is a perspective view a hollow bicycle crank arm that is constructed in accordance with another embodiment of the present invention; and
Figure 12 is a simplified cross sectional view of hollow bicycle crank arm illustrated in Figure 11 as seen along section line 12-12 in Figure 11.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

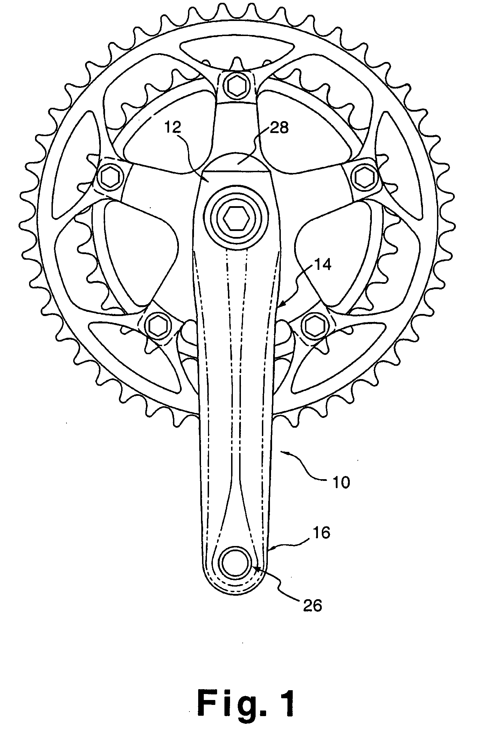

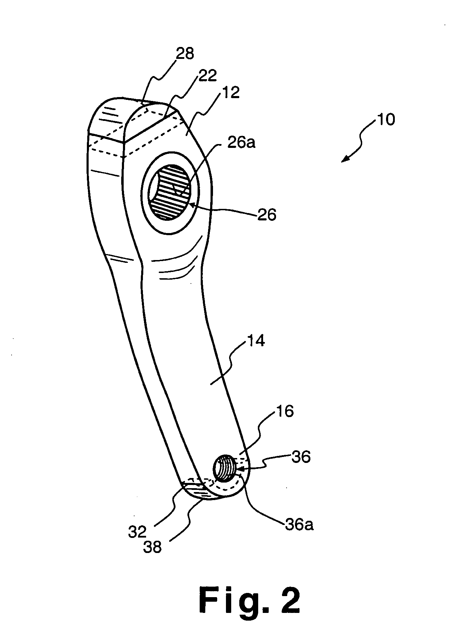

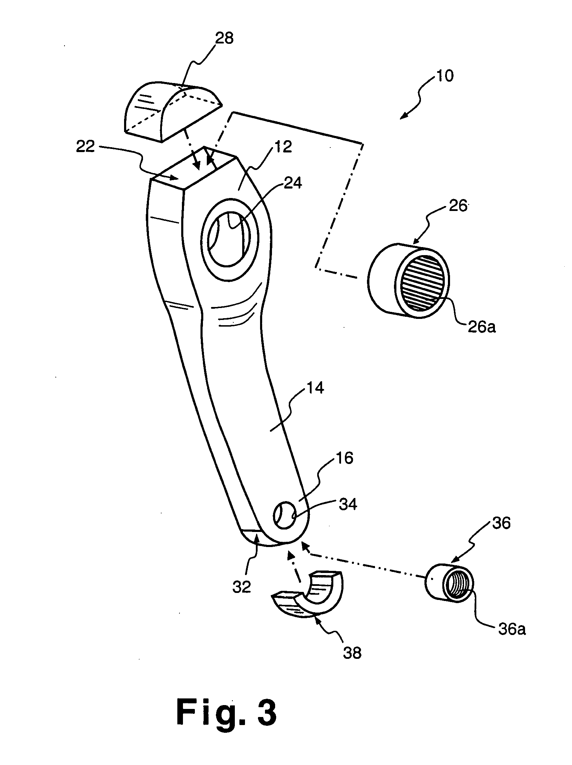

Referring initially to Figures 1-3, a bicycle crank set is illustrated that uses a hollow bicycle crank arm 10 in accordance with a preferred embodiment of the present invention. Basically, the hollow bicycle crank arm 10 includes a first crank axle mounting end portion 12, a central crank body portion 14 and a second pedal mounting end portion 16. The hollow bicycle crank arm 10 is preferably a one-piece, unitary member that is produced by the tube hydroforming method described below. By using the tube hydroforming method described below, the hollow bicycle crank arm 10 can be highly designed in a complex shape, while still being light, highly strong and highly rigid. The hollow bicycle crank arm 10 can be produced using the tube hydroforming method described below, such that its circumferential lengths at selected cross sections of this hollow bicycle crank arm 10 is 79.8 mm at minimum and 113 mm at maximum, and its a longitudinal length is 200 mm measured between the end edges.

The crank axle mounting end portion 12 has an open end 22 and a crank axle hole 24. The open end 22 of the crank axle mounting end portion 12 is dimensioned to receive a crank axle attachment part 26 that is located within the crank axle mounting end portion 12 beneath the crank axle hole 24. The crank axle attachment part 26 is an annular member with a plurality of internal splines 26a formed along its internal surface. The splines 26a are configured and arranged to engage a plurality of external splines of a crank axle (not shown). The outer diameter or width of the crank axle attachment part 26 is larger than the diameter or width of the crank axle hole 24 of the crank axle mounting end portion 12. In other words, an annular overlap is formed by the crank axle mounting end portion 12 with the outer periphery of the crank axle attachment part 26. This arrangement prevents the crank axle attachment part 26 from being pulled axially out of the crank axle hole 24 of the crank axle mounting end portion 12. Thus, the crank axle hole 24 of the crank axle mounting end portion 12 has a predetermined diameter or width that is dimensioned to receive a crank axle therethrough, but prevent the crank axle attachment part 26 from falling therethrough.

The open end 22 is preferably covered by an end cap 28, which closed the end of the crank axle mounting end portion 12. Preferably, the end cap 28 is step shaped so that a smooth transition is formed between the exterior surfaces of the crank axle mounting end portion 12 and the exterior surfaces of the end cap 28. In other words, a continuously smooth, flush exterior surface extends over each of the interfaces between the contiguous exterior surfaces of the crank axle mounting end portion 12 and the end cap 28.

The pedal mounting end portion 16 has an open end 32 and a pedal spindle hole 34. The open end 32 of the pedal mounting end portion 16 is dimensioned to receive a pedal spindle attachment part 36 that is located within the pedal mounting end portion 16 beneath the pedal spindle hole 34. The pedal spindle attachment part 36 is an annular member with a set of internal threads 36a formed along its internal surface. The threads 36a are configured and arranged to engage external threads of a pedal spindle (not shown). The outer diameter or width of the pedal spindle attachment part 36 is larger than the diameter or width of the pedal spindle hole 34 of the pedal mounting end portion 16. In other words, an annular overlap is formed by the pedal mounting end portion 16 with the outer periphery of the pedal spindle attachment part 36. This arrangement prevents the pedal spindle attachment part 36 from being pulled axially out of the pedal spindle hole 34 of the pedal mounting end portion 16. Thus, the pedal spindle hole 34 of the pedal mounting end portion 16 has a predetermined diameter or width that is dimensioned to receive a pedal spindle therethrough, but prevent the pedal spindle attachment part 36 from falling therethrough.

The open end 32 is preferably covered by an end cap 38, which closed the end of the pedal mounting end portion 16. Preferably, the end cap 28 is configured such that a smooth transition is formed between the exterior surface of the pedal mounting end portion 16 and the exterior surface of the end cap 38. In other words, a continuously smooth, flush exterior surface extends over each of the interfaces between the contiguous exterior surfaces of the pedal mounting end portion 16 and the end cap 38.

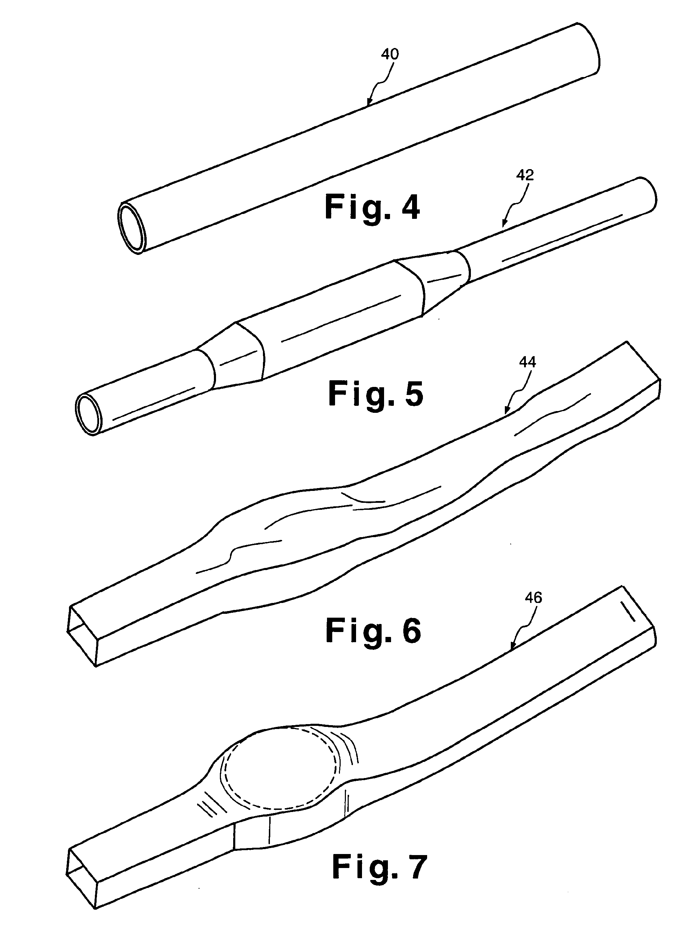

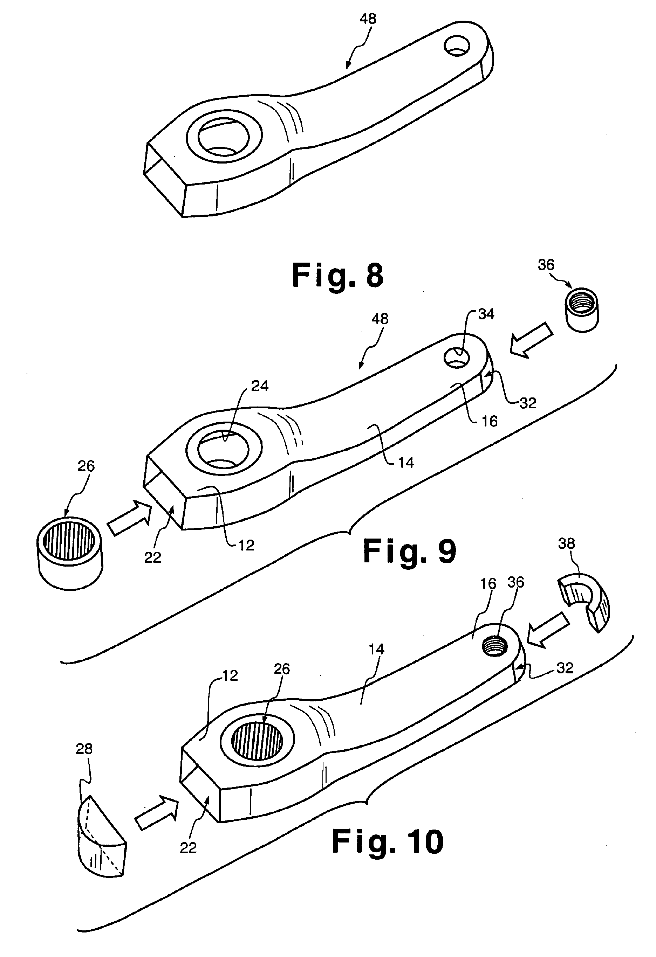

Figures 4-10 will be used to explain a production method of manufacturing the hollow bicycle crank arm 10 by using tube hydroforming in accordance with this invention. Generally, speaking, tube hydroforming is a method wherein a tube or hollow crank material (Figure 4) is used as a base material for the hollow bicycle crank arm 10, and then tube hydroforming is performed on the tube material to form a crank body (Figure 7). In particular, this base material or hollow crank material is set into a mold that has a predetermined shape for forming the crank body illustrated in Figure 7. Then, water is forced into the tube of hollow crank material, with an increasing axis force being applied to the tube ends, as needed, and increasing the water pressure in the tube such that the hollow crank material is deformed to the shape of the mold. After the crank body is formed by tube hydroforming, the crank body is cut to its final shape (Figure 7) and the attachment parts 26 and 36 and the end caps 28 and 38 are installed (Figures 8 and 9).

The tube hydroforming method itself is already well known as a processing method. Thus, it will be apparent from this disclosure that the basic technology of tube hydroforming can be utilized without modification to produce the hollow bicycle crank arm 10 of the present invention as explained below. While tube hydroforming is a well-known method, it defies the common wisdom that a crank body, which is conventionally an integral structure with both ends closed, can be produced by tube hydroforming. In particular, tube hydroforming is typically performed on a tube that is open at both ends.

According to this invention, as shown in Figure 4, first, a tube material 40 is prepared as a tubular base material for the bicycle crank arm 10. The production method of forming the tubular base material is not critical to the present invention. The tubular base material can be a welded tube or a seamless tube. As for the material for the tubular base material, a low specific gravity material is preferably for weight saving, while a material with a high Young's modulus is preferably to increase rigidity. Preferably, the tubular base material has a high yield point and tensile strength to increase strength. However, since forming of the bicycle crank arm 10 may be difficult if the strength of the tubular base material is too high, it is preferably that the tubular base material is soft when processing and hard when finished.

To realize these effects, the following two types of materials are worth considering. The first type of material is one that has a large n value, that is easily work-hardened, and that increases strength of the product by leveraging work-hardening when tube hydroforming. One example of the first type of material is SUS304 that is work-hardened. The second type of material is one that has comparatively low material strength and that is easy to process, and then the material strength of product is increased by heat treatment after forming steps by, for example, aging heat treatment. Examples of the second type of material are beta titanium alloys that are heat treated or carbon steel that is hardened with quenching, etc.

Next, the forming steps are implemented to form the hollow bicycle crank body. Depending on the final shape of the hollow bicycle crank arm 10, an initial forming step may need to be conducted prior to the tube hydroforming process as seen in Figure 5. When forming by the hydroforming method, if the difference between the maximum cross section value and the minimum cross section value of circumferential length of the cross section is large, there are situation where the bicycle crank arm 10 cannot be formed. For example, when the ratio to expand the tube will be too large when using a tube with an initial diameter or width that is equal to the smallest circumferential length of the crank body, then the ratio to expand the tube may be too large. In that case, the tube material 40 that corresponds with the maximum value of circumferential length of cross section is prepared as shown in Figure 4. Then, as shown in Figure 5, a preliminary forming step is conducted to form an initially deformed tube 42 in which the diameter of the unprocessed tube or tube material 40 (Figure 4) is at least partially changed by swagging and/or die squeezing. The initially deformed tube 42 preferably has been deformed so that the circumferential lengths are various points substantially correspond to the circumferential length of the final crank body shape. In other words, the circumferential length of the initially deformed tube 42 varies along its length (longitudinal direction) to substantially correspond to the circumferential length of the final crank body shape. In this way, the amount change in the cross sectional length of the initially deformed tube 42 to the final crank body shape can be minimized as needed and/or desired.

Next, the tube hydroforming method is implemented to form the general shape of the crank body as shown in Figure 7. First, forming is implemented by pressing the initially deformed tube 42 into fit a hydroforming mold. This pressing changes the shape of the initially deformed tube 42 (Figure 5) to the shape of a preformed pressed tube 44 as seen in Figure 6. Next, as shown in Figure 7, the preformed pressed tube 44, which is set in the hydroforming mold, has pressurized water injected inside, with an increasing axis force being applied as needed and the inside pressure increasing to cause the preformed pressed tube 44 to conform to the shape of the mold. To simplify the description, a detailed description of the hydroforming mold, the hydroforming equipment, and etc. have been omitted.

Next, the crank axle hole 24 and the pedal spindle hole 34 are formed and excess material at the ends are removed from the intermediate crank body shape as shown in Figure 7. Creating holes at this time can be implemented by machining or punching as needed and/or desired. After that, the crank axle attachment part 26 and the pedal spindle attachment part 36 are inserted into the open ends 22 and 32, respectively, of the crank body. The crank axle attachment part 26 and the pedal spindle attachment part 36 are then welded or otherwise fixedly secured to the crank body. The joining method is not particularly limited to welding or bonding, etc. but to prevent HAZ softening of welding parts, a laser weld is one preferred method.

As mentioned above, the crank axle attachment part 26 and the pedal spindle attachment part 36 can not be inserted into the crank body from the holes 24 and 34, because the widths of the attachment parts 26 and 36 are larger than the diameters of the holes 24 and 34. This arrangement is desirable for the attachment parts 26 and 36 because if the attachment parts 26 and 36 were mounted by inserting into the holes 24 and 34 of the hydroformed crank body, then the attachment parts 26 and 36 may separate from the crank body in the event that the joint breaks. If the joint connecting the crank axle attachment part 26 to the crank body is broken in the present invention, the crank arm 10 remains attached to the crank axle because the crank axle attachment part 26 can not fall through the hole 24.

Optionally, the end caps 28 and 38 are fixedly secured within the open ends 22 and 32, respectively to form a finished product. Since the end caps 28 and 38 are not subjected to much force or weight from the rider, the end caps 28 and 38 can be made of a light plastic. It is easily understood that it is thin and hollow so that it can make a strong appeal as a light part and be highly designed.

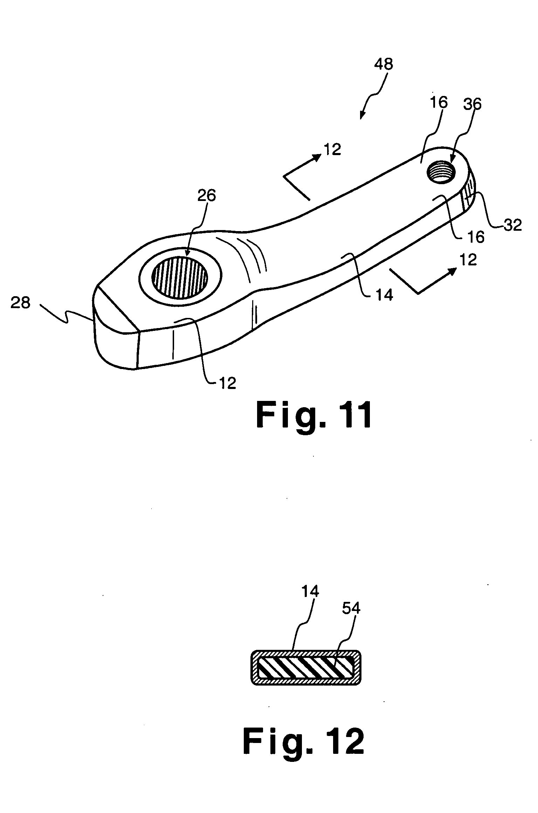

Optionally, as seen in Figures 11 and 12, a light filling material 54 can be used to fill the cavity of the crank arm 10. If proceeding to thin using high strength materials, lowering of rigidity occurs and can be a problem. In that case, by filling with the filling material 54 that consists of light resin foam, etc. in the hollow inside, a reduction in rigidity can be prevented.

In a first example, an SUS304 welded tube having a diameter of 27.1 mm and a wall thickness of 1.5 mm as the thickness was prepared as an unprocessed material. Then, both the tube ends of the unprocessed tube were die-squeezed to a diameter of 25.4 mm, and a circumferential length of 79.8 mm. Next, the tube was presses into a hydroforming mold by perform-pressing and then the tube was shaped by the hydroforming method.

Next, the excess material from both the tube ends which were cut off, and crank axle holes and pedal spindle holes were punched out. The crank axle attachment part and the pedal spindle attachment part were joined to the crank body by inserting them through an open ends of the crank body, and then welding them to the crank body by laser weld. Thus, a crank arm with openings at both tube edges was produced. The crank are with both open ends was not only well designed, but also created a unique atmosphere by the aperture cutting the air when riding the bicycle. Alternatively, a plastic end caps were produced and glued the crank arm to close off the opening ends of the crank arm.

In a second example, a beta titanium alloy tube having a diameter of 34.0 mm and a wall thickness of 1.5 mm as the thickness was prepared as an unprocessed material. Then, both the tube ends of the unprocessed tube were multistage die-squeezed to diameters that fit within 5% of an expanding tube ratio at each section. Then, the tube was presses into a hydroforming mold by perform-pressing and then the tube was shaped by the hydroforming method. Next, aging heat treatment was implemented so that strength and rigidity were increased. After that, just as in the first example, post-processing was implemented. The product produced had a unique titanium surface and a very advanced designed.

Next, Table 1 shows advantages of the conventional method as described above and the method relating to the present invention.

**Table 1**

| Item | Conventional Method | Present Invention | |
|---|---|---|---|
| | | Example 1 | Example 2 |
| Raw Material | Aluminum Alloy | SUS304 | Beta Titanium Alloy |
| Product Weight | 200g | 200g | 180g |
| Yield | 60% | 90% | 90% |
| Number of Processing Steps | 15 | 5 | 6 |
| Rigidity | 1 | 1.2 | 1.1 |
| Static Strength | 1 | 1.5 | 1.2 |
| Fatigue Strength | 1 | 1.3 | 1.3 |

As seen from the table, rigidity, static strength and fatigue strength are ratios for which a crank arm in the conventional method is supposed to have a value of 1. An examination condition of rigidity, static strength and fatigue strength, on the state which a bicycle was built up, was to increase the load with fixing the axis on the gear side at the position where a pedal stayed vertically in the middle. The rigidity was evaluated by displacement when applying the fixed load, the strength was evaluated by load which plastic deformation, and the fatigue strength was evaluated by load which was not broken after repeatedly loading more than 10⁷ times.

In any items, performance of a crank in this invention was better than a crank in the conventional method. The number of processing steps was dramatically decreased, and the running cost reduced by half.

In this invention, because a tube formed together as a material is used, the entire part can be thin and hollow even in the final product. The shape of the crank arm is such that the large part of the circumferential length of cross section is positioned elsewhere in the tube ends, the tube ends are comparatively thin, which is ideal for forming by the hydroforming method.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle crank arm (10) comprising:
a central crank body portion (14);
a crank axle mounting end portion (12) disposed at a first end of the central crank body portion (14); and
a pedal mounting end portion (16) disposed at a second end of the central crank body portion (14),
the central crank body portion (14) being formed together with the crank axle mounting end portion (12) and the pedal mounting end portion (16) by tube hydroforming as a hollow one-piece, unitary member with an interior space.

2. The bicycle crank arm (10) according to claim 1, further comprising
a crank axle attachment part (26) disposed within the crank axle mounting end portion (12), and
a pedal spindle attachment part (36) disposed within the pedal mounting end portion (16).

3. The bicycle crank arm (10) according to claim 2, wherein
the crank axle mounting end portion (12) has a crank axle hole (24) with a width that is smaller than a width of the crank axle attachment part (26) such that the crank axle mounting end portion (12) overlaps a peripheral portion of the crank axle attachment part (26); and
the pedal mounting end portion (16) has a pedal spindle hole (34) with a width that is smaller than a width of the pedal spindle attachment part (36) such that the pedal mounting end portion (16) overlaps a peripheral portion of the pedal spindle attachment part (36).

4. The bicycle crank arm (10) according to claim 3, wherein
the crank axle mounting end portion (12) has a first open end (22) located at a first edge of the bicycle crank arm (10), with the first open end (22) being dimensioned such that the crank axle attachment part (26) passes therethrough; and
the pedal mounting end portion (16) has a second open end (32) located at a second edge of the bicycle crank arm (10), with the second open end (32) being dimensioned such that the pedal spindle attachment part (36) passes therethrough.

5. The bicycle crank arm (10) according to claim 4, further comprising
a first end cap (28) disposed in the first open end (22) of the crank axle mounting end portion (12) to close the first open end (22) of the crank axle mounting end portion (12); and
a second end cap (38) disposed in the second open end (32) of the pedal mounting end portion (16) to close the second open end (32) of the pedal mounting end portion (16).

6. The bicycle crank arm (10) according to claim 5, further comprising
a filler material disposed in the interior space such that substantially an entire area of the interior space is filled.

7. The bicycle crank arm (10) according to claim 2, wherein
the crank axle mounting end portion (12) has a first open end (22) located at a first edge of the bicycle crank arm (10), with the first open end (22) being dimensioned such that the crank axle attachment part (26) passes therethrough; and
the pedal mounting end portion (16) has a second open end (32) located at a second edge of the bicycle crank arm (10), with the second open end (32) being dimensioned such that the pedal spindle attachment part (36) passes therethrough.

8. The bicycle crank arm (10) according to claim 1, further comprising
a filler material disposed in the interior space such that substantially an entire area of the interior space is filled.

9. The bicycle crank arm (10) according to claim 1, wherein
the crank axle mounting end portion (12) has a first open end (22) located at a first edge of the bicycle crank arm (10); and
the pedal mounting end portion (16) has a second open end (32) located at a second edge of the bicycle crank arm (10).

10. The bicycle crank arm (10) according to claim 9, further comprising
a first end cap (28) disposed in the first open end (22) of the crank axle mounting end portion (12) to close the first open end (22) of the crank axle mounting end portion (12); and
a second end cap (38) disposed in the second open end (32) of the pedal mounting end portion (16) to close the second open end (32) f the pedal mounting end portion (16).

11. A method of producing a bicycle crank arm (10) comprising:
forming a hollow tube with first and second open ends (22, 32);
shaping the hollow tube into a crank body portion (14) by tube hydroforming; forming a crank axle hole (24) and a pedal spindle hole (34);
inserting a crank axle attachment part (26) and a pedal spindle attachment part (36) into the first and second open ends (22, 32); and
fixedly joining the crank axle attachment part (26) and the pedal spindle attachment part (36) to the crank body portion (14) with the crank axle attachment part (26) being aligned with the crank axle hole (24) and the pedal spindle attachment part (36) being aligned with the pedal spindle hole (34).
